# EUROPEAN PATENT SPECIFICATION

(11) **EP 0 743 166 B1**
(45) Date of publication and mention of the grant of the patent: **15.11.2000**
(21) Application number: 96500054.0
(22) Date of filing: 08.05.1996
(51) Int. Cl.: B29C 70/68, B65D 25/00

(54) **Box-case with characters incorporated**
Gehäuse mit integrierten Zuschriften
Boîte avec inscriptions incorporées

(30) Priority: 16.05.1995 ES 9501270 U
(43) Date of publication of application: 20.11.1996
(73) Proprietor: CIPEX, S.A., 08210 Barbera del Valles (Barcelona) (ES)
(72) Inventor: Ribas Quer, Maria Victoria, 08034 Barcelona (ES)
(74) Representative: Durán Olivella, Alfonso

(56) References cited:
- EP-A- 0 490 165
- EP-A- 0 615 827
- FR-A- 2 626 810
- US-A- 2 586 978
- DATABASE WPI Week 8337 Derwent Publications Ltd., London, GB; AN 83-761398 XP002018432 & JP-A-58 131 047 (TOKAI RIKA DENKI K. K.) , 4 August 1983
- DATABASE WPI Week 7903 Derwent Publications Ltd., London, GB; AN 79-04710B XP002018433 & JP-A-53 138 464 (YOSHINO KOGYOSHO K. K. ) , 2 December 1978

## Description

This invention refers to a box-case with characters incorporated, which comprises substantially innovative features and inventive activity in relation to the purpose for which it is destined.

In production of box-cases for various purposes, it is necessary to obtain not only the features of resistance and volume necessary for the purpose for which the box-case is destined, but also, characters must be incorporated in the outer walls of the box-case. These characters are destined to provide information to the users concerning the content of the box, its commercial make, and other relevant information.

At present, box-cases destined for various uses, such as boxes for implements and tools of the domestic type and the like, are generally produced by means of processes of moulding of synthetic materials, such as processes of blowing, injection or the like. Although these processes satisfactorily provide the dimensional features required for the box-case, they do not solve the problem of inclusion of information characters, which have to be added subsequently by methods of screen printing, painting, adhesion etc. All the above-mentioned processes involves a given complication, adding a substantial cost factor to box-cases which are mass-produced, and are destined to achieve a low production cost.

The box-case according to the present invention is destined to solve the above-described problem, i.e. that of producing the information characters required on the outer surfaces of the box-case, without increasing substantially the costs of this operation, and in addition, obtaining very effective and indelible marking on the surface of the box-case, which increases considerably the efficiency of the box-case, since the information characters included on the latter do not lose part of their good initial appearance during use, contrary to what happens to the information characters currently known of the type which are painted or joined by adhesives, which, after the box-case has been in use for a short time, become difficult to read, or at least confer an image of low quality on the box-case as a whole.

In order to achieve its objective, the box-case according to the present invention has on the surfaces on which information characters of various types are to be included, a series of flat elements which are connected to one another, forming a single-piece structure previously produced by injection, and which contains the information characters, obtaining a series of injected components in flat form, the outer surfaces of which are disposed on a single plane, and which below this single plane have multiple connection bridges which project towards the rear surface, destined both to connect the series of flat elements which constitute the information characters, whether these are letters, numbers or symbols of other types, designs etc., and to obtain good anchorage with the remainder of the integral material of the box-case in which the single-piece structure referred to is inserted. In order to obtain this close connection, it is preferable to place the flat elements of the single-piece structure in the mould where the box-case is to be produced, such that the outer face of said flat elements coincides with the outer face or wall of the box-case, such that after moulding, the box-case has outer surfaces which are completely smooth, with the structure and shape required for the latter, but which contain the information characters integrated in the mass of the lateral walls of the box-case. By means of this arrangement, the box-case can be produced very easily and economically, and the information characters which appear on its lateral walls are of an indelible nature, since they are inserted in the material of the box-case, and do not become damaged or impaired in use.

For the sake of better understanding, by way of example, there are attached some explanatory drawings of an example of an embodiment of a box-case according to the present invention.
Figures 1 and 2 are front and rear plan views of single-piece structure with information characters to be incorporated in the box-case according to the present invention;
Figure 3 is a cross-section through the plane indicated;
Figure 4 is a partial plan view of an outer face of a box-case produced according to the present invention, showing characters;
Figures 5 and 6 are both details of an area of the lateral wall of a box-case according to the present invention, showing the incorporation of the information characters in the mass of this box-case;
Figure 7 is a lateral elevated view of a box-case according to the present invention; and
Figure 8 is an elevated view in partial cross-section according to a plane perpendicular to that of figure 7.

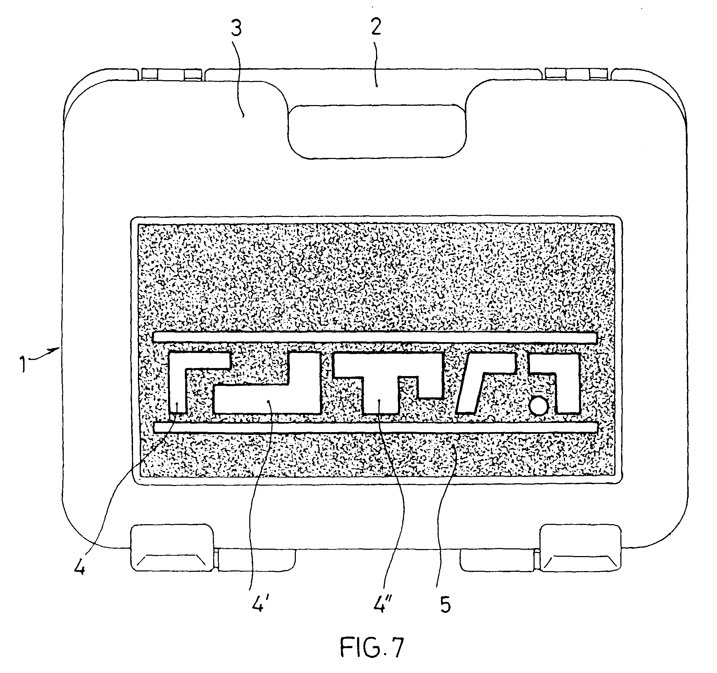

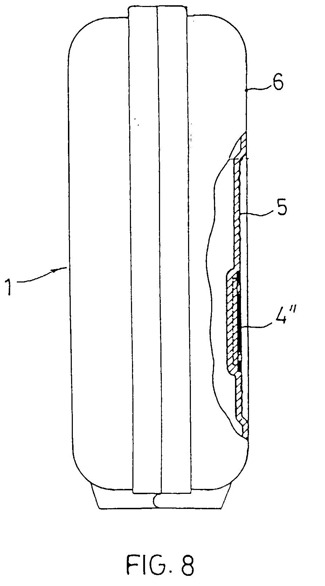

The box-case according to the present invention is represented by way of example in figures 7 and 8, which show the body -1- of the box-case provided with a handle -2-, and on one of the lateral surfaces 3 of which there are multiple information characters such as 4, 4', 4'' etc. which, as can be seen in figure 8, are level with the adjacent face 5 of the box-case. According to a preferred embodiment, this adjacent area 5 is disposed such as to form a shallow recess in relation to the remainder of the surfaces 6 of the side of the case 1, it being characteristic that the information characters in question 4, 4', 4'' etc. are level with the adjacent surface 5 of the box-case 1.

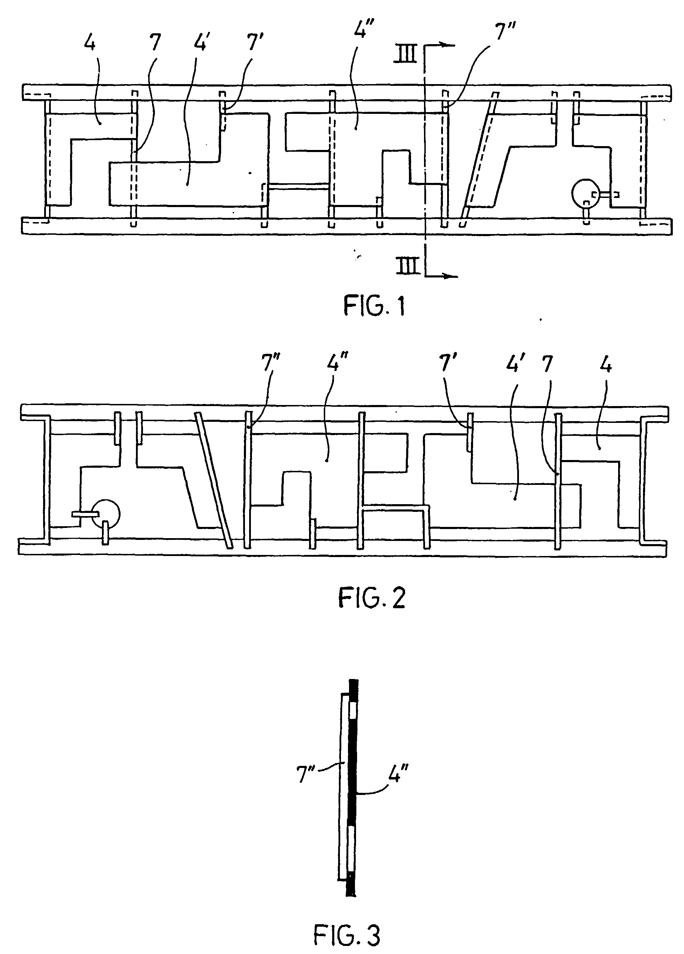

The series of information characters 4, 4', 4'' etc. disposed on one of the lateral surfaces of the box-case 1 are connected to one another, according to a feature of the present invention, by means of a series of transverse bridges as shown in figures 1, 2 and 3. In fact, these figures show several of the information characters 4, 4' 4'' etc. which incorporate the characters in the box-case, which are connected to one another by means of connection bridges of various forms such as 7, 7', 7'' etc. It is characteristic that the information characters such as 4, 4', 4'' etc. are disposed such that their outer surfaces are co-planar, whereas the connection bridges 7, 7', 7'' etc. are disposed such that they are to some extent recessed in planes lower than the aforementioned single front surface. In some areas of the information characters, there can also be provided other lugs, not shown, in the direction opposite the outer surface which contains the information characters.

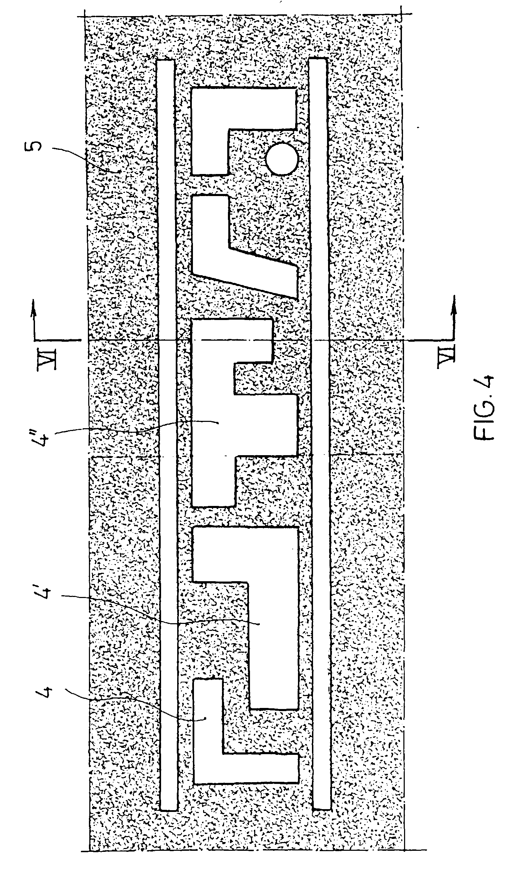

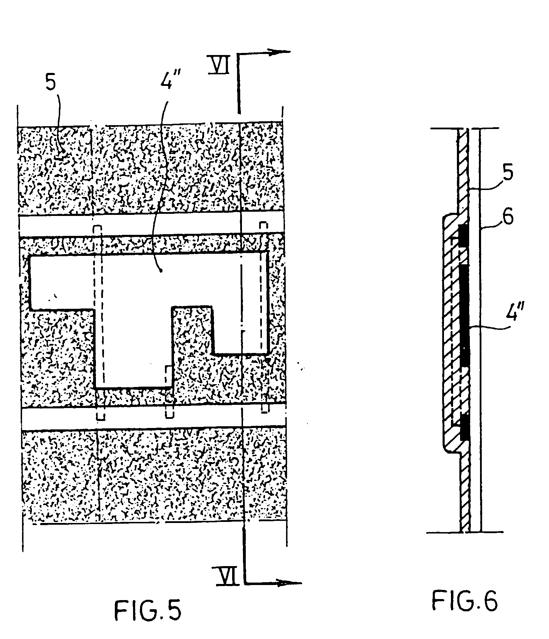

An essential feature of the present invention is that the single-piece structure comprising the information characters is incorporated in the mass of the box-case, as can be seen in figures 4 to 8. As shown in these figures, the various information characters 4, 4', 4'' etc. are co-planar, but are completely distinctive from the immediately adjacent area 5 of the corresponding surface of the box-case in which they are incorporated, the connection bridges being completely inserted in the mass of the adjacent area 5 of the box-case, such that from the exterior only the information characters 4, 4', 4'' can be observed, with the arrangement, shape and colouring required in contrast with the immediately adjacent area 5 of the box-case, making it possible to obtain information characters of the type required in the box-case in a very simple and economic manner. It should also be taken into account that, in view of the embodiment of the information characters incorporated in the box-case, discolouring, damage or scratching caused by use are minimal, since the material used is synthetic and can have a specific hardness and surface shine if required, which will prevent the loss of features of these information characters.

## Claims

1. Box-case having information characters on at least one of its outer surfaces characterised in that the box-case (1) has incorporated in at least one of its outer walls (3) a single-piece structure, the single-piece structure comprising individual areas which constitute a series of information characters (4, 4',4" ...), with their outer surfaces disposed in a single plane and a series of interconnecting bridges (7, 7', 7" ...) for the series of information characters (4, 4', 4" ...) disposed in lower planes relative to the visible outer surface of said series of information characters, the outer surfaces of the series of information characters coinciding with the outer surface (5) of the box-case.

2. Box-case according to claim 1, characterised in that the series of information characters (4, 4', 4" ...) form a single moulded body which is integral with the interconnecting bridges (7, 7', 7" ...).

## Patentansprüche

1. Koffer mit informativen Zeichen auf mindestens einer seiner äußeren Oberflächen, **dadurch gekennzeichnet,** daß der Koffer (1) in mindestens einer seiner äußeren Wände (3) eine einstückige Struktur integriert hat, wobei die einstückige Struktur individuelle Bereiche umfaßt, welche eine Folge von informativen Zeichen (4, 4', 4" ...) bilden, wobei deren äußere Oberflächen in einer einzigen Ebene angeordnet sind und wobei eine Folge von Verbindungsbrücken (7, 7', 7" ...) für die Folge von informativen Zeichen (4, 4', 4" ...) in tieferen Schichten relativ zu der sichtbaren äußeren Oberfläche der genannten Folge von informativen Zeichen angeordnet sind, wobei die äußeren Oberflächen der Folge von informativen Zeichen mit der äußeren Oberfläche (5) des Koffers zusammenfallen.

2. Koffer gemäß Anspruch 1, **dadurch gekennzeichnet,** daß die Folge von informativen Zeichen (4, 4', 4" ...) einen einzelnen geformten Körper bilden, der integral mit den Verbindungsbrücken (7, 7', 7" ...) ausgebildet ist.

## Revendications

1. Boîte de rangement comportant des inscriptions sur au moins l'une de ses surfaces extérieures, caractérisée en ce que la boîte de rangement (1) comporte, de façon incorporée dans au moins l'une de ses parois extérieures (3), une structure monobloc, la structure monobloc comprenant des zones individuelles qui constituent une série d'inscriptions (4, 4', 4"...), avec leurs surfaces extérieures disposées dans un seul plan et une série de ponts d'interconnexion (7, 7', 7"...) pour la série d'inscriptions (4, 4', 4"...) disposée dans des plans inférieurs par rapport à la surface extérieure visible de ladite série d'inscriptions, les surfaces extérieures de la série d'inscriptions coïncidant avec la surface extérieure (5) de la boîte de rangement.

2. Boîte de rangement selon la revendication 1, caractérisée en ce que la série d'inscriptions (4, 4', 4" ...) forme un unique corps moulé qui est d'un seul tenant avec les ponts d'interconnexion (7, 7', 7"...).
